Europäisches Patentamt

European Patent Office

Office européen des brevets

(19)

(11) Veröffentlichungsnummer: **0 334 214 B1**

(12) # EUROPÄISCHE PATENTSCHRIFT

(45) Veröffentlichungstag der Patentschrift:
08.01.92 Patentblatt 92/02

(51) Int. Cl.$^5$: **C08F 20/16, C08F 20/18,**
C08F 220/16, C08F 220/18,
C09D 133/04

(21) Anmeldenummer: 89104744.1

(22) Anmeldetag: 16.03.89

(54) **Buntsteinputze auf Kunstharzbasis.**

(30) Priorität: 24.03.88 DE 3809920

(43) Veröffentlichungstag der Anmeldung:
27.09.89 Patentblatt 89/39

(45) Bekanntmachung des Hinweises auf die
Patenterteilung:
08.01.92 Patentblatt 92/02

(84) Benannte Vertragsstaaten:
AT BE CH DE ES FR GB IT LI NL SE

(56) Entgegenhaltungen:
EP-A- 0 103 199
EP-A- 0 103 253
EP-A- 0 180 868
DE-A- 3 418 524
GB-A- 491 894

(56) Entgegenhaltungen:
CHEMICAL ABSTRACTS, Band 84, Nr. 4, 26.
Januar 1976, Seite 119, Zusammenfassung Nr.
19233j, Columbus, Ohio, US; Y. ARITA et al.:
"Pretreatments for metal finishing with a polyalkyl methacrylate emulsion"

(73) Patentinhaber: BASF Aktiengesellschaft
Carl-Bosch-Strasse 38
W-6700 Ludwigshafen (DE)

(72) Erfinder: Ley, Gregor, Dr.
In den Trankstuecken
W-6719 Wattenheim (DE)
Erfinder: Schultze, Wolfgang
Schuetzenweg 1-3
W-6710 Frankenthal (DE)
Erfinder: Vinke, Johannes, Dr.
Heinrich-von-Kleist-Strasse 9
W-6832 Hockenheim (DE)
Erfinder: Wistuba, Eckehardt, Dr.
Im Obergarten 7
W-6702 Bad Duerkheim (DE)

## Beschreibung

Die vorliegende Erfindung betrifft Buntsteinputze auf Kunstharzbasis, welche als Bindemittel Polymere enthalten, die aus

A)  60 bis 100 Gew.% eines tert. Butylesters einer $\alpha,\beta$-ethylenisch ungesättigten Carbonsäure oder Dicarbonsäure mit bis zu 5 C-Atomen oder eines Gemisches derartiger tert.-Butylester,

B)  0 bis 40 Gew.%. eines Acrylsäure- oder Methacrylsäureester eines nicht tertiären $C_1$-$C_{20}$-Alkanols oder eines Gemisches dieser Monomeren,

C)  0 bis 20 Gew.% Vinylchlorid, Vinylacetat und/oder Vinylpropionat, wobei für die Mengen $m_B$ und $m_C$ der Monomeren B und C die Beziehung $m_C \leq 0,5\ m_B$ gilt,

D)  0 bis 10 Gew.% Acrylsäure, Methacrylsäure, Acrylsäureamid und/oder Methacrylsäureamid sowie

E)  0 bis 5 Gew.% sonstiger copolymerisierbarer Monomerer aufgebaut sind, sowie 50 bis 80 Gew.% Buntstein-Granulat mit einer durch schnittlichen Teilchengröße von 1 bis 4,5 mm, geringe Mengen üblicher Hifsmittel und als Restmenge wasser.

Beschichtungsmassen auf Kunstharzbasis, z.B. Anstrichfarben, Verputzmittel, Baukleber und Spachtelmassen in Form von organinchen Lösungen oder wäßrigen Dispersionen sind allgemein bekannt.

Sie enthalten als Bindemittel meistens Kunstharze, wobei sich Polymerisate auf der Basis von Acrylsäure- und Methacrylsäreentern hinsichtlich ihrer Filmbildeeigenschaften, Lichtdurchlässigkeit, Lichtechtheit, Wasserfestigkeit, Verseifungsfestigkeit und Wetterbeständigkeit besonders bewährt haben.

Unbefriedigend ist jedoch gewöhnlich das Brandverhalten dieser Bindemittel, da sie verhältnismäßig leicht entflammbar sind und im Brandfall häufig brennend abtropfen.

Hinsichtlich den Brandverhaltens ist daher halogenhaltigen Polymerisaten, z.B. solchen auf Basis von Vinylestern und Vinylchlorid, der Vorzug zu geben, obwohl diese beim Brennen Halogenwasserstoffe entwickeln.

Aus der DE-A-3233840 sind Bindemittel für Baukleber, Spachtelmassen und Putze bekannt, die aus 55 bis 72 Gew.% Vinylpropionat, 27,5 bis 44,9 Gew.% tert.-Butylacrylat, 0,1 bis 0,5 Gew.% Acrylsäure oder Methacrylsäure und gegebenenfalls weiteren Comonomeren aufgebaut sind. Diese Bindemittel haben hervorragende anwendungstechnische Eigenschaften, lassen aber im Hinblick auf das Brandverhalten und die Verseifungsbeständigkeit noch zu wünschen übrig.

Der vorliegenden Erfindung lagen daher Buntsteinputze als Aufgabe zugrunde, in denen das Bindemittel nach Applikation dieser Massen einerseits nicht leicht entflammbar ist und im Brandfall weder schmilzt noch brennend abtropft und mit denen andererseits deckende und transparente Beschichtungen hergestellt werden können, die insbesondere verseifungsfest sowie lichtecht, wasserfest und wetterbeständig sind und bei längerer Einwirkung von Wasser nicht weiß anlaufen.

Demgemäß wurden die eingangs definierten Buntsteinputze auf Kunstharzbasis gefunden.

Weiterhin wurde gefunden, daß solche Buntsteinputze besonders gut geeignet sind, die

a)  5 bis 15 Gew.% der genannten Polymeren in Form eines Dispersionspolymerisates (wasserfrei gerechnet),

b)  50 bis 67 Gew.% des Buntsteingranulates mit einer durch schnittlichen Teilchengröße von 1 bis 4,5 mm,

c)  geringe Mengen sonstiger üblicher Hilfsmittel und

d)  als Restmenge Wasser enthalten

Für die Herstellung der Bindemittel geeignete Monomeren A sind die tert.-Butylester der Acryl- und Methacrylsäure, sowie die mono- und di-tert.-Butylester der Malein-, Fumar- und Itaconsäure, wobei das tert.-Butylacrylat aus Gründen der Copolymerisierbarkeit besonders bevorzugt wird.

Diese tert.-Butylester sind vermutlich für das im Brandfall nicht brennende Abtropfen des Polymeren verantwortlich. Sie spalten bei hohen Temperaturen Isobuten ab, wodurch zunächst ein an der entsprechenden Säure reiches Polymerisat entsteht, das sich vor Erreichen des Schmelzpunktes zersetzt. Da Säuren die Isobutenabspaltung begünstigen, wird diese Spaltung im Brandfall durch die entstehenden Carbonsäuregruppen sogar autokatalytisch beschleunigt.

Als Monomere B) kommen besonders Acrylate wie Methylacrylat, Ethylacrylat, Isopropylacrylat, iso- und n-Butylacrylat sowie Ethylhexylacrylat in Betracht, wobei n- und iso-Butylacrylat als plastifizierende Monomere und wegen ihrer besonders ausgeprägten Hydroxyseunempfindlichkeit bevorzugt sind. Aus der Reihe der Methacrylate sind Methylmethacrylat, Ethylmethacrylat, Isoropylmethacrylat sowie n- und iso-Butylmethacrylat zu nennen, wobei hier das Methylmethacrylat von besonderem Interesse ist.

Monomere der Gruppe C) wird man dann mitverwenden, wenn man auf besondere Brandsicherheit Wert legt, also neben Vinylacetat und Vinylpropionat auch Vinylchlorid und/oder Vinylidenchlorid, obwohl die beiden letzteren den Nachteil der Chlorwasserstoffentwicklung haben.

Die Monomeren D) wie Methacrylsäure, Acrylsäure, Acrylamid und Methacrylamid werden bevorzugt eingesetzt, wenn man die Bindemittel nach den Methoden der Dispersionspolymerisation herstellt, denn Teilchen aus Polymerisaten mit diesen Monomeren als Bausteinen sind in wäßriger Dispersion wegen der hydrophilen Gruppen besonders koagulationsstabil.

Als Monomere E) kommen z.B. Styrol, Acrylnitril und Vinylversatat in Betracht. Bevorzugt werden Polymere folgender Zusammensetzung :

65 bis 95, besonders 65 bis 80 Gew.% der Monomeren A)

5 bis 30, besonders 17 bis 28 Gew.% der Monomeren B)

und 0 bis 20, besonders 0 bis 15 Gew.% der Monomeren C).

Die erfindungsgemäß als Bindemittel zu verwendenden Polymerisate sind nach den an sich bekannten Methoden der radikalischen Substanz-, Lösungs- und Dispersionspolymerisation unter Verwendung von Initiatoren wie Azodiisobutyronitril, Dibenzoylperoxid, Wasserstoffperoxid oder Natriumperoxodisulfat erhältlich, so daß sich nähere Angaben hierzu erübrigen.

Da die erfindungsgemäßen Buntsteinputze meistens in Form wäßriger Dispersionen verwendet werden, empfiehlt es sich besonders, das Bindemittel ebenfalls in dieser Form einzusetzen und demgemäß stellt man es vorzugsweise als Dispersionspolymerisat her.

Als Emulgatoren haben mich hierfür besonders die ethoxylierten Alkylphenole (EO-Grad : 3 bis 30 ; Alkylrest : $C_8$ und/oder $C_9$) und/oder ethoxylierte Fett-alkohole (EO-Grad : 3 bis 25 ; Alkylrest : $C_8$-$C_{25}$) bewährt, die allein oder zusammen mit Natriumsalzen von Alkylsulfaten sowie ethoxylierten Alkylphenolen die zusätzlich eine Sulfonsäure-Gruppe tragen, verwendet werden können.

Die erfindungsgemäßen Buntsteinputze enthalten vorzugsweise

| | |
|---|---|
| 5 bis 15, | vorzugsweise 7 bis 12 Gew.% des Bindemittels in Form eines Dispersionspolymerisates (wasserfrei gerechnet) |
| 50 bis 80, | vorzugsweise 55 bis 70 Gew.% Buntstein-Granulat mit einer durchschnittlicher Teilchengröße von vorzugsweise 1 bis 4,5 mm (längster Durchmesser) |

sowie geringe Mengen sonstiger Stoffe, z.B. Verdicker, Netzmittel, Film-bildehilfsmittel und als Restmenge Wasser.

Neben dem verbesserten Brandverhalten hinsichtlich des Nichtabtropfens zeichnen sich diese Putze dadurch aus, daß sie kaum zum sogenannten Weißanlaufen infolge der Einwirkung von Wasser neigen, z.B. infolge von Regen oder feuchter Atmosphäre.

Beispiele

Im folgenden sind Prozente Gewichtsprozente.

Beispiele 1 bis 5

Herstellung verschiedener Dispersionspolymerisate

Beispiel 1 (allgemeine Arbeitsvorschrift)

Eine Lösung aus

| | |
|---|---|
| 485 g | Wasser |
| 0,7 g | des Natriumsalzes eines sulfonierten und ethoxylierten (EO-Grad 25) $C_8$-Alkylphenols (Emulgator I) |
| 0,5 g | eines ethoxylierten (EO-Grad 25) $C_8$-Alkylphenols (Emulgator II) und |
| 0,4 g | Natriumperoxodisulfat |

wurde im Laufe von 3 Stunden bei 85°C unter Rühren zunächst mit einem Gemisch aus

| | |
|---|---|
| 440 g | Wasser |
| 14 g | des Emulgators I |
| 25 g | Acrylsäure |

| 10 g | Acrylsäureamid |
| 750 g | tert.-Butylacrylat und |
| 250 g | n-Butylacrylat |

und anschließend im Laufe von 3,5 Stunden mit einer Lösung aus

| 150 g | Wasser und |
| 3,6 g | Natriumperoxodisulfat |

versetzt.

Nach Zugabe von rd. 10 g einer rd. 1,5%igen wäßrigen Wasserstoffperoxidlösung wurde die Polymerisation noch eine Stunde lang fortgesetzt, und anschließend wurde die fertige Dispersion mit Ammoniak auf pH 8,5 eingestellt.

Die Zusammensetzung der Polymerisate geht aus Tabelle 1 hervor und Tabelle 2 gibt dir Eigenschaften dieser Dispersion wieder.

Tabelle 1

| % Monomere | Beispiele | | | | |
|---|---|---|---|---|---|
| | 1 | 2 | 3 | 4 | 5 (Vergleich) |
| tert.-Butylacrylat | 72,5 | 46,2 | 67,6 | 67,6 | 39,8 |
| tert.-Butylmethacrylat | - | 30,0 | - | - | - |
| n-Butylacrylat | 24,2 | 19,0 | 19,3 | 14,5 | 0,2 |
| Acrylsäure | 2,4 | 3,8 | - | 2,4 | - |
| Acrylamid | 0,9 | - | - | - | - |
| Methacrylamid | - | 1,0 | 1,0 | 1,0 | - |
| Methylmethacrylat | - | - | 9,7 | - | - |
| Methacrylsäure | - | - | 2,4 | - | - |
| Vinylpropionat | - | - | - | 14,5 | 60 |

4

Tabelle 2

| Eigenschaften | Beispiele | | | | |
|---|---|---|---|---|---|
| | 1 | 2 | 3 | 4 | 5 (Vergleich) |
| Feststoffgehalt % DIN 53 189 | 49,8 | 51,2 | 50,2 | 49,5 | 55,0 |
| Lichtdurchlässigkeit[1] | 88 | 91 | 90 | 92 | 60 |
| Viskosität (mPa·s) DIN 53 018 | 452 | 355 | 766 | 513 | 1000 |
| MFT (°C)[2] DIN 53 787 | 8 | 15 | 10 | 8 | 15 |
| Wasseraufnahme nach 24 Std (%) DIN 53 495 | 7,5 | 6,5 | 7,3 | 11,1 | 22 |
| Verseifungstestzahl[3] | 49 | 49 | 48 | 44 | 38 |

[1] Die Daten für die Lichtdurchlässigkeit beziehen sich auf eine 0,01 %ige Dispersion und eine Schichtdicke von 25 mm. Gemessen wird mit einem handelsüblichen Photometer relativ zu Wasser, dem willkürlich ein LD-Wert von 100 zugeordnet wird.

[2] MFT = minimale Filmbildetemperatur

[3] Zur Bestimmung der Verseifungstestzahl werden 10 g 50 %ige Dispersion mit 10 ml Wasser und 50 ml 1n NaOH bei 50°C für 24 Std. versetzt. Die in dieser Zeit nicht umgesetzte Natronlauge wird anschließend mit 1n HCl zurücktitriert. Die Testzahl gibt den Salzsäureverbrauch in ml wieder.

Beispiel 6

Massen für die Buntsteinputze sowie die Eigenschaften der hiermit hergestellten Putze

Mit den Polymerisaten gemäß den Beispielen 1 bis 5 wurden Bunsteinputz-Massen folgender Zusammensetzung hergestellt :

| % | Bestandteil |
|---|---|
| 8,5 | Polymerisat, eingesetzt als 50 %ige Dispersion |
| 35 | Calciumcarbonat-Granulat mit einer durchschnitt-lichen Körnung von 1,5 mm (längster Durchmesser) |
| 35 | Calciumcarbonat-Granulat mit einer durchschnitt-lichen Körnung von 2,5 mm (längster Durchmesser) |
| 0,13 | Verdickungsmittel auf Basis von Cellulose |
| 0,25 | Verdickungsmittel auf Basis von Polyurethan |
| 0,20 | Konservierungsmittel |
| 1,50 | Testbenzin (Sdp. 155 bis 185°C) |
| 0,10 | konz. Ammoniak |
| 0,10 | Antischaum-Mittel |
| 19,22 | Wasser |
| 100,00 | |

a) Weißanlaufen des Putzes

Die vorgenannten Putz-Massen wurden auf 20 × 10 cm große Faserzementplatten aufgetragen. Nach 24 stündiger Trockenzeit bei Raumtemperatur wurden die beschichteten Platten (Trockenmaterialdicke rd. 2,5 mm) zur Hälfte für 2 Stunden in Wasser von 23°C gestellt. Anschließend wurde das Weißanlaufen beurteilt. Die Ergebnisse sind Tabelle 3 zu entnehmen.

b) Schmelzen und Zersetzung des Putzes bei Erhitzen in der Flamme

Die gemäß (a) beschichteten Platten wurden 4 Tage lang bei Raumtemperatur getrocknet, danach senkrecht gestellt und 1 min lang mit dem inneren Kegel der Flamme eines Bunsenbrenners beflammt. Als Beurteilungskriterium für das Schmelzen und die Zersetzung des Putzes diente das Ausmaß, in welchem das Granulat von der Schicht abfiel.
Die Ergebnisse sind in Tabelle 3 zusammengestellt.

c) Abtropfverhalten der Bindemittel bei Brand

Bei dieser Prüfung wurde ein freier, aus den Dispersionen gemäß den Beispielen 1 bis 5 hergestellter Polymerfilm (1 cm × 5 cm × 0,5 cm) für 10 sec einer Bunsenbrennerflamme ausgesetzt. Das Verhalten der Filme geht aus Tabelle 3 hervor.

EP 0 334 214 B1

Tabelle 3: Anwendungstechnische Eigenschaften der Buntstein-Putze bzw.
der Bindemittel

| Bindemittel gemäß Beispiel | a) Weißanlaufen | b) Schmelzen und Zersetzung | c) Abtropfverhalten |
|---|---|---|---|
| 1 | schwach | kein | |
| 2 | sehr schwach | kein | Abfallen des Granulates | Verkohlung, kein brennendes Abtropfen |
| 3 | sehr schwach | kein | | |
| 4 | schwach | geringes | | |
| 5 (Vergleich) | stark | mäßig starkes | | Probe schmilzt etwas und tropft geringfügig brennend ab |

## Patentansprüche

1. Buntsteinputze, enthaltend
a) 5 bis 15 Gew.-% eines Polymeren, das aus
    A) 60 bis 100 Gew.-% eines tert. Butylesters einer α,β-ethylenisch ungesättigten Carbonsäure oder Dicarbonsäure mit bis zu 5 C-Atomen oder eines Gemisches derartiger tert.-Butylester,
    B) 0 bis 40 Gew.-% eines Acrylsäure- oder Methacrylsäureester eines nicht-tertiären $C_1$-$C_{20}$-Alkanols oder eines Gemisches dieser Monomeren,
    C) 0 bis 20 Gew.-% Vinylchlorid, Vinylacetat und/oder Vinylpropionat, wobei für die Mengen $m_B$ und $m_C$ der Monomeren B und C die Beziehung $m_C \leq 0,5\, m_B$ gilt,
    D) 0 bis 10 Gew.-% Acrylsäure, Methacrylsäure, Acrylsäureamid und/oder Methacrylsäureamid sowie
    E) 0 bis 5 Gew.-% sonstiger copolymerisierbarer Monomerer aufgebaut ist,
b) 50 bis 80 Gew.-% Buntstein-Granulat mit einer durchschnittlichen Teilchengröße von 1 bis 4,5 mm,
c) geringe Mengen üblicher Hilfsmittel und
d) als Restmenge Wasser.

## Revendications

1. Cailloutages bigarrés, qui contiennent
a) de 5 à 15% en poids d'un polymère, constitué de
    A) 60 à 100% en poids d'un ester butylique tertiaire d'un acide dicarboxylique ou d'un acide carboxylique α,β-éthyléniquement insaturé, comportant jusqu'à 5 atomes de carbone, ou d'un mélange de tels esters butyliques tertiaires.
    B) 0 à 40% en poids d'un ester de l'acide acrylique ou de l'acide méthacrylique d'un alcanol en $C_1$ à $C_{20}$, non tertiaire, ou d'un mélange de tels monomères,
    C) 0 à 20% en poids de chlorure de vinyle, d'acétate de vinyle et/ou de propionate de vinyle, où pour les proportions $m_B$ et $m_C$ des monomères B et C, vaut la relation $m_C \leq 0,5\, m_{B'}$,
    D) 0 à 10% en poids d'acide acrylique, d'acide méthacrylique, d'acrylamide et/ou de métacrylamide, comme aussi
    E) 0 à 5% en poids d'autres monomères copolymérisables,
b) 50 à 80% en poids d'un granulé de cailloutage bigarré d'un calibre moyen des particules de 1 à 4,5 mm,
c) de faibles quantités d'adjuvants usuels et
d) de l'eau quant au reste.

7

## Claims

1. A stone chip render, containing

a) from 5 to 15% by weight of a polymer formed from

    A) from 60 to 100% by weight of a tert-butyl ester of an $\alpha,\beta$-ethylenically unsaturated carboxylic acid or dicarboxylic acid of not more than 5 carbon atoms or a mixture of such tert-butyl esters,

    B) from 0 to 40% by weight of an acrylate or methacrylate of a nontertiary $C_1$-$C_{20}$-alkanol or a mixture of these monomers,

    C) from 0 to 20% by weight of vinyl chloride, vinyl acetate and/or vinyl propionate, the relationship $m_C \leq 0.5\, m_B$ being applicable to the amounts $m_B$ and $m_C$ of the monomers B and C,

    D) from 0 to 10% by weight of acrylic acid, methacrylic acid, acrylamide or methacrylamide and

    E) from 0 to 5% by weight of other copolymerizable monomers,

b) from 50 to 80% by weight of stone chip granules having a mean particle size of from 1 to 4.5 mm,

c) small amounts of conventional assistants, and

d) water as remainder.